# EUROPEAN PATENT SPECIFICATION

(11) **EP 1 496 668 B1**
(45) Date of publication and mention of the grant of the patent: **04.06.2008**
(21) Application number: 04103276.4
(22) Date of filing: 09.07.2004
(51) Int. Cl.: H04L 29/08, H04L 29/06, H04L 12/28

(54) **Apparatus and method for enabling communications between terminals having different protocols**
Vorrichtung und Verfahren für die Kommunikation zwischen Endgeräten unter Benutzung von verschiedenen Protokollen
Appareil et procédé permettant la communication entre des terminaux utilisants des protocoles différents

(30) Priority: 11.07.2003 KR 2003047410
(43) Date of publication of application: 12.01.2005
(73) Proprietor: SAMSUNG ELECTRONICS CO., LTD., Suwon-si, Gyeonggi-Do 442-742 (KR)
(72) Inventor: Shin, Sang-hyun 911-1403 Jugong Apt., Gyeonggi-do (KR); Lee, Hak-goo 4-208 Limkwang Apt., Gyeonggi-do (KR)
(74) Representative: Read, Matthew Charles

(56) References cited:
- EP-A- 1 119 137
- WO-A-02/13462
- DE M CORDEIRO C ET AL INSTITUTE OF ELECTRICAL AND ELECTRONICS ENGINEERS: "A novel architecture and coexistence method to provide global access to/from bluetooth WPANs by IEEE 802.11 WLANs" CONFERENCE PROCEEDINGS OF THE 2003 IEEE INTERNATIONAL PERFORMANCE, COMPUTING, AND COMMUNICATIONS CONFERENCE. (IPCCC). PHOENIX, AZ, APRIL 9 - 11, 2003, IEEE INTERNATIONAL PERFORMANCE, COMPUTING AND COMMUNICATIONS CONFERENCE, NEW YORK, NY : IEEE, US, vol. CONF. 22, 9 April 2003 (2003-04-09), pages 23-30, XP010642202 IEEE ISBN: 0-7803-7893-8
- MOBILIAN: "Wi-Fi and Bluetooth: An Examination of Coexistence Approaches" MOBILIAN, 2001, XP002285787 MOBILIAN COOPERATION

## Description

The present invention relates to a network terminal device. The invention relates also to a method of communication between heterogeneous protocols.

Since the introduction of the Internet, the world has become increasingly networked. With the recent development of wireless technologies, wireless networking, using a variety of technologies, such as code division multiple access (CDMA), wireless LAN, infrared data association (IrDA) technology and Bluetooth technology, have also been developed and widely used by ordinary users. In addition, through the use of wireless communication, terminals can be connected to each other to form an ad-hoc network. Each wireless communication method uses its own protocol stack and because of this, there is the problem that terminals using heterogeneous communication methods cannot communicate with each other.

The prior art wireless local area network (LAN) protocol stack and the prior art Bluetooth protocol stack will now be reviewed with reference to attached drawings.

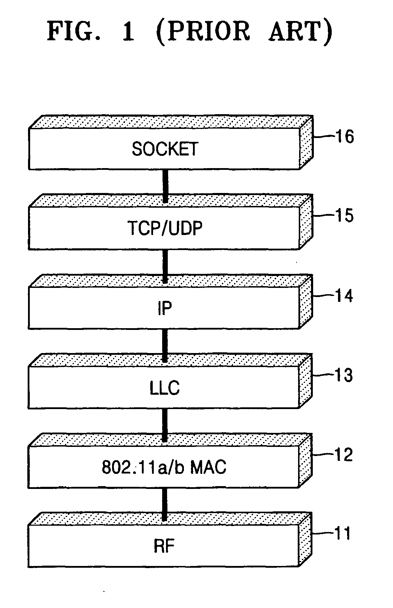

Figure 1 is a diagram of the structure of a prior art wireless LAN protocol stack.

Referring to Figure 1, the wireless LAN protocol stack comprises, from bottom to top, a radio frequency (RF) layer 11, a 802.11a/b media access control (MAC) layer 12, a logical link control (LLC) layer 13, an Internet protocol (IP) layer 14, a transmission control protocol (TCP)/user datagram protocol (UDP) layer 15 and a socket layer 16.

The RF layer 11 corresponds to the physical layer that is the lowest layer in the open systems interconnection (OSI) reference model, and 802.11a uses the 5 GHz band, while 802.11 b uses the 2.4 GHz band. Binary phase shift keying (BPSK), quadrature phase shift keying (QPSK), 16-quadrature amplitude modulation (QAM) and 64-orthogonal frequency division multiplexing (OFDM) are used as modulation methods.

The 802.11 a/b MAC layer 12 corresponds to the lower layer of two sub layers of the data link layer of the OSI reference model and is a protocol for a plurality of terminals sharing a transmission channel to efficiently use the shared transmission channel. The 802.11 is a set of standards for a wireless LAN developed by an IEEE working group. All 802.11 standards use carrier sense multiple access (CSMA)/collision avoidance (CA), as in Ethernet, to handle contention.

Since the MAC addresses, allocated to products, are in effect world unique, they can be said to be hardware device addresses. In an Ethernet LAN, all terminals connected in a single LAN segment can communicate using upper layer protocols such as TCP/IP, on the basis on their MAC addresses.

The LLC layer 13 corresponds to the upper layer of the two sub layers in the data link layer in the OSI reference model and processes error control, flow control, frame handling, and MAC sub layer addressing.

The IP layer 14 corresponds to the network layer in the OSI reference model and is a protocol used in transmitting data from one terminal to another terminal on the Internet. Each terminal on the Internet has at least one or more unique addresses (IP addresses) such that it can be distinguished from other terminals. When a user transmits or receives data such as email or a web page, the data is divided into small pieces referred to as packets. Each of these packets includes the IP address of the source terminal and the IP address of the destination terminal or network.

Since the data is divided into a plurality of packets, each packet may be transmitted through a different route and may arrive in an order different from the order of transmission. This is handled by another protocol, the TCP. The TCP layer 15 corresponds to the transport layer in the OSI reference model and is a protocol which rearranges the packets into the correct order.

The UDP layer 15 operates as an alternative to the TCP layer 15. UDP is a protocol which provides limited services when data is exchanged between terminals on a network using IP. Unlike TCP, however, UDP does not provide services such as dividing a message into packets (datagrams) or recombining, and rearranging arriving data packets. That is, an application program using UDP should confirm that the entire message has arrived in the correct order.

The socket layer 16 corresponds to the application layer, that is the highest layer in the OSI reference model, and is a communication method between a client program and a server program on a network.

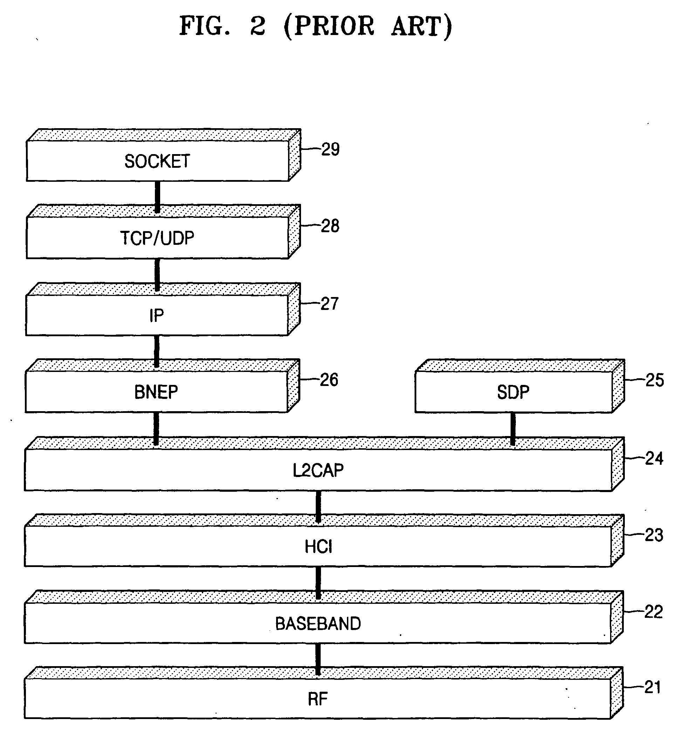

Figure 2 is a diagram illustrating a structure of a prior art Bluetooth protocol stack.

Referring to Figure 2, the Bluetooth protocol stack protocol stack comprises, from bottom to top, an RF layer 21, a baseband layer 22, a host controller interface (HCI) layer 23, a logical link control and adaptation protocol (L2CAP) layer 24, a service discovery protocol (SDP) layer 25, a Bluetooth network encapsulation protocol (BNEP) layer 26, an IP layer 27, a TCP/UDP layer 28 and a socket layer 29.

The RF layer 21 corresponds to the physical layer that is the lowest layer of the OSI reference model, and employs frequency hopping across 79 channels normally with a 1mW output and 1MHz bandwidth in the industrial, scientific, medical (ISM) band at 2.4-2.4835GHz. The modulation method is Gaussian frequency shift keying (G-FSK) and for duplex communication, a time division duplex (TDD) method is used.

The baseband layer 22 is also included in the physical layer, that is the lowest layer in the OSI reference model, with the RF layer. Seven Bluetooth terminals can be connected in one piconet. One of the seven terminals becomes the master, which manages the piconet and performs tasks such as generation of the frequency hopping patterns. The remaining terminals are connected to the master terminal as slaves.

The HCI layer 23 corresponds to the data link layer of the OSI reference model and is a protocol acting as a relay and connecting a Bluetooth terminal and a host. The reason why the Bluetooth standard includes the HCI is that, by completely dividing hardware and software, when the Bluetooth hardware module of a product is replaced, software does not need to be replaced as well.

The L2CAP layer 24 corresponds to the data link layer in the OSI reference model and is a protocol for interfacing the lower protocol stack and the upper application. The L2CAP performs a role similar to the TCP of the Internet protocol.

The L2CAP layer 24 is placed immediately above the HCI layer 23 and allows an upper protocol or application to exchange a data packet of up to 64 MB.

The BNEP layer 26 corresponds to the data link layer in the OSI reference model and is a protocol for transmitting control packets and data packets between Bluetooth terminals. A personal area network (PAN) profile is a rule to transfer IP traffic between Bluetooth terminals. An Ethernet packet is encapsulated in an L2CAP packet by using the BNEP. A Bluetooth terminal is connected to another Bluetooth terminal in order to form an ad-hoc network. At this time, a search according to baseband inquiry and the SDP 25 is performed. However, before this, Bluetooth terminals must register the services, provided by the terminals, with a service discovery (SD) database. Once connected, the Bluetooth terminal generates an L2CAP channel for the BNEP, uses BNEP commands to initialize the BNEP connection and sets filtering for other network packet types. The remaining layers, the IP 27, TCP/UDP 28, and socket 29 layers, are the same as those in the wireless LAN and their explanation will be omitted.

As described above, the conventional wireless LAN terminal has a protocol stack for wireless LAN communications and the conventional Bluetooth terminal has a protocol stack for Bluetooth communications. That is, a wireless LAN terminal can form an ad-hoc network with other wireless LAN terminals based on the wireless LAN protocol stack, while a Bluetooth terminal can form an ad-hoc network with other Bluetooth terminals based on the Bluetooth protocol stack. Accordingly, in conventional technology, there is a problem in that, in the case of a terminal having a Bluetooth module, the terminal can communicate only with another Bluetooth-enabled terminal and, in the case of a terminal having a wireless LAN module, the terminal can communicate only with another wireless-LAN-enabled terminals. Also, since conventional communication between a Bluetooth terminal and a wireless LAN terminal is impossible, there is a problem that an ad-hoc network including Bluetooth and wireless LAN terminals, i.e. heterogeneous terminals, cannot be established.

According to a first aspect of the invention there is provided a network terminal device as claimed in claim 1.

The intermediate layer is preferably below layer 4 of the OSI network model.

Preferably, the processing means is configured such that received signals, which are addressed to the device, are passed up through said intermediate layer and received signals, which are not addressed to the device, undergo protocol conversion in said intermediate layer and transmission.

The protocol stack means comprises a common part, e.g. IP, TCP/UDP and socket layers, above said intermediate layer and first and second lower parts, associated respectively with the first and second transceiver means, below said intermediate layer.

The transceiver means may implement protocol stack layers, e.g. the MAC layer, below those implemented by the processing means.

The first protocol may be an IEEE 802.11 protocol and the second protocol may be Bluetooth.

Preferably, the processing means is programmable with application programs which communicate via said protocol stack means.

According to a second aspect of the invention, there is provided a method of communication between heterogeneous protocols as claimed in claim 11.

Additional preferred and optional features of the invention are set forth in the dependent claims.

Embodiments of the present invention will now be described, by way of example, with reference to Figures 3 to 12 of the accompanying drawings, in which:
Figure 1 is a diagram of a prior art wireless LAN protocol stack;
Figure 2 is a diagram of the Bluetooth protocol stack;
Figure 3 is a diagram of the structure of a hybrid wireless LAN/Bluetooth protocol stack according to the present invention;
Figure 4 is a diagram showing the format of a IEEE 802.11 packet;
Figure 5 is a diagram showing the format of a Bluetooth packet;
Figure 6 is a block diagram apparatus for establishing an ad-hoc network according to the present invention;
Figure 7 is a diagram of the structure of a wireless LAN→Bluetooth communication apparatus according to the present invention;
Figure 8 is a diagram of the structure of a Bluetooth→wireless LAN communication apparatus according to the present invention;
Figure 9 is a block diagram of a hybrid wireless LAN/Bluetooth terminal according to the present invention;
Figures 10A and 10B are flowcharts illustrating a method of establishing an ad-hoc network according to the present invention;
Figure 11 is a flowchart illustrating a method of wireless LAN→Bluetooth communications according to the present invention; and
Figure 12 is a flowchart illustrating a method for Bluetooth→wireless LAN communications according to the present invention.

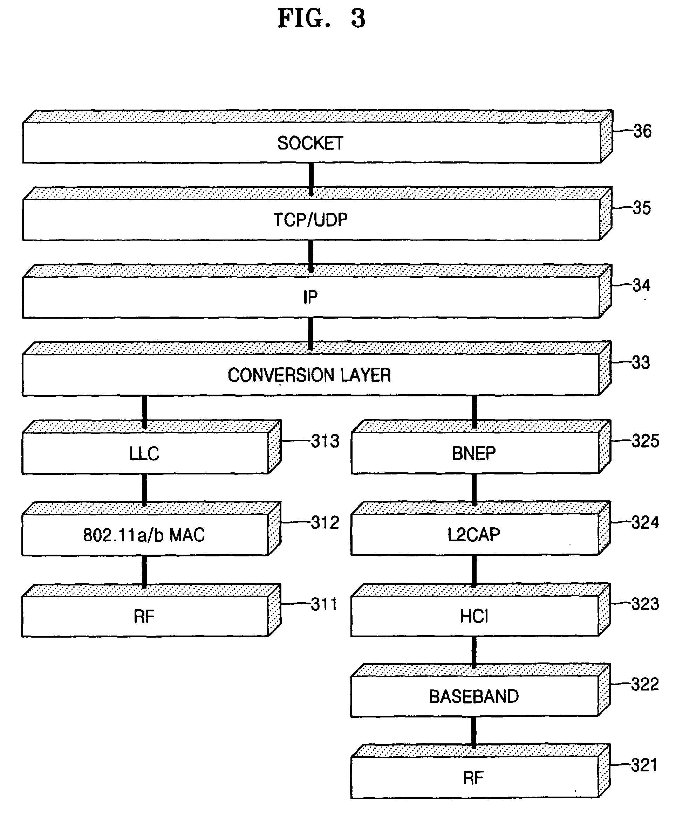

Referring to Figure 3, a hybrid wireless LAN/Bluetooth protocol stack comprises, from the bottom to the top, a LAN RF layer 311, an 802.11a/b media access control (MAC) layer 312 and a logical link control (LLC) layer 313 in parallel with a Bluetooth RF layer 321, a baseband layer 322, a host controller interface (HCI) layer 323, a logical link control and adaptation protocol (L2CAP) layer 324 and a Bluetooth network encapsulation protocol (BNEP) layer 325. Then, a conversion layer 33, an IP layer 34, TCP/UDP 35 and socket 36 sit above both the LLC layer 313 and BNEP layer 325.

The hybrid wireless LAN/Bluetooth protocol stack unifies the upper layers common to both the wireless LAN protocol stack and the Bluetooth protocol stack.

The hybrid wireless LAN/Bluetooth protocol stack is bifurcated below the conversion layer 33 into distinct wireless LAN protocol and Bluetooth protocol stacks, which differ from each other. The bifurcated portion will be referred to as a "double layer portion". That is, the double layer portion is divided into a Bluetooth protocol stack portion and a wireless LAN protocol stack portion. In the wireless LAN protocol stack side, an RF layer 311, a 802.1a/b MAC layer 312 and a LLC layer 313 are stacked in order from the bottom, while in the Bluetooth protocol stack portion, an RF layer 31, a baseband layer 322, an HCI layer 323, an L2CAP layer 324, and a BNEP layer 325 are stacked in order from the bottom.

The hybrid wireless LAN/Bluetooth protocol stack includes the conversion layer 33 for converting wireless LAN format packets into a Bluetooth format packets and *vice versa* as packets pass between the single and double layer portions.

The main reason why communication between a wireless LAN terminal and a Bluetooth terminal cannot be performed with conventional technology is that formats of the wireless LAN standard and the Bluetooth standard are different from each other and, even if a packet is received from one by the other, the packet cannot be understood and therefore, cannot be processed internally.

To solve this problem, the conversion layer converts a wireless LAN format packets into Bluetooth format packets and vice versa.

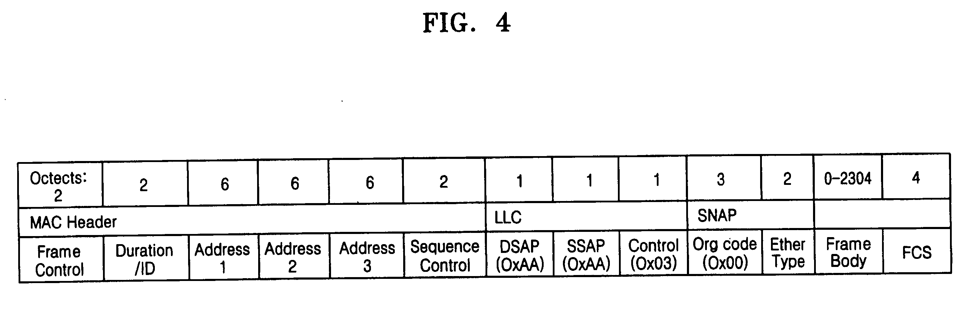

Referring to Figure 4, a packet complying with IEEE 802.11 standards includes a frame control field, a duration/ID field, an address 1 field, an address 2 field, an address 3 field, a sequence control field, a destination service access point (DSAP) field, a source service access point (SSAP) field, a control field, an organization code field, an ether type field, a frame body field and a frame check sequence (FCS) field. The frame control field, the duration/ID field, the address 1 field, the address 2 field, the address 3 field and the sequence control field are those fields related to a MAC header. The destination address is written in address 1 field and the source address is written in address 2 field. The DSAP field, the SSAP field, and the control field relate to the LLC layer and the organization code field and the ether type field relate to the subnetwork access protocol (SNAP). The type of the Ethernet packet is written in the ether type field. The actual data desired to be transmitted by a user, i.e. the payload, is written in the frame body field. The FCS field is a field for checking for errors in all fields except the FCS field, by performing cyclic redundancy checking (CRC).

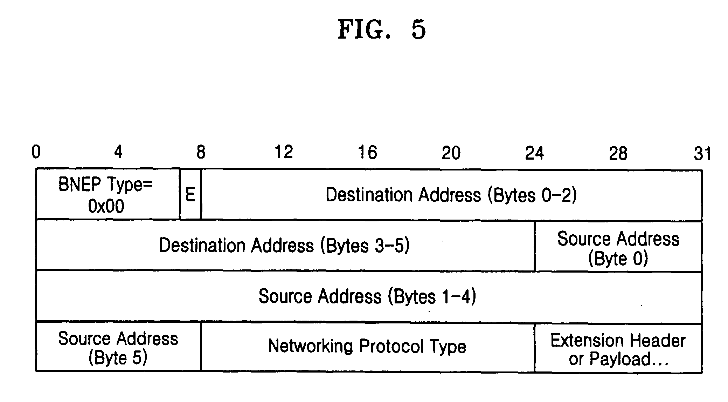

Referring to Figure 5, a packet complying with the Bluetooth standard includes a BNEP type field, an extension field E, a destination address field, a source address field, a networking protocol type field and a payload field. An extension header field may be added in front of the payload field.

The type of BNEP header is written in the BNEP type field. The extension field indicates whether or not one or more extension header fields have been added in front of the payload field. The destination address is written in the destination address field. The source address is written in the source address field. The type of the networking protocol is written in the networking protocol type field. The payload data is written in the payload field. According to the Bluetooth standard, a value matching the type of an Ethernet packet is written in the networking protocol type field.

The conversion layer makes the following conversions:
(a) Bluetooth packet source address field to wireless LAN packet source address field (address 2 field) and vice versa;
(b) Bluetooth packet destination address field to wireless LAN packet destination address field (address 1 field) and vice versa;
(c) Bluetooth packet networking protocol type field to wireless LAN packet ether type field and vice versa; and
(d) Bluetooth packet payload field to wireless LAN packet frame body field.

Each of the fields that are the objects of reciprocal conversion is a field in which actual data, such as a source address, a destination address, a format type or payload data, is written. Once the formats of these fields are converted, then the data to be transmitted to a desired destination can be transmitted even between heterogeneous terminals. Other remaining fields contain formal information and, when necessary, the information can be generated by a receiving side. When this data is unnecessary, it can be discarded.

A process for converting a wireless LAN signal into a Bluetooth signal when a wireless LAN signal is received will now be explained.

A received wireless LAN signal in the LAN RF layer 311 passes through this layer. The RF layer 311 in the wireless LAN protocol stack side uses the 5 GHz band for 802.11a and the 2.4 GHz band for 802.11b. The modulation method conventionally used in 802.11 is phase shift keying (PSK). Accordingly, a wireless LAN signal using one of these frequency bands and this modulation method passes through the RF layer 311. The wireless LAN signal which passes through the RF layer 311 arrives at the 802.11a/b MAC layer 312. If the wireless LAN signal correctly configured for the 802.11 a/b MAC layer 312, the signal passes through this layer. Conventionally, if the MAC address loaded on the wireless LAN signal matches the MAC address of the terminal receiving the wireless LAN signal, the signal passes through the 802.11a/b MAC layer 312.

On the other hand, the received signal may need to be forwarded to a Bluetooth device having the destination MAC address carried by the wireless LAN signal, if the hybrid LAN/Bluetooth terminal is providing a gateway between the wireless LAN and Bluetooth aspects of a hybrid network. In this case, the wireless LAN format signal is converted into a Bluetooth format signal and in the conversion layer 34.

The wireless LAN signal passing through the 802.11a/b MAC layer 312 arrives at the LLC layer 313. If the wireless LAN signal is correctly configured for the LLC layer 313, the signal passes through this layer. The wireless LAN signal which passes through the LLC layer 313 arrives at the conversion layer 34. If the destination of the wireless LAN signal is the receiving hybrid wireless LAN/Bluetooth terminal, the signal passes through the conversion layer and is transferred to the upper layers such that an application running on the terminal can obtain the data loaded on the wireless LAN signal.

However, if the destination of the wireless LAN signal is a Bluetooth terminal, important information, such as the destination address, the source address, and the data, is not modified in the conversion layer but the format of the packet is converted such that the signal can be transmitted to the destination Bluetooth terminal without change.

The wireless LAN signal (strictly speaking, before conversion, this was a wireless LAN signal, but after conversion, this is a Bluetooth signal) which is converted into a Bluetooth format packet then passes through the BNEP layer 325, the L2CAP layer 324, the HCI layer 323, the baseband layer 322 and the Bluetooth RF layer 321 and becomes a fully formed Bluetooth signal which is transmitted to the destination Bluetooth terminal. Accordingly, an environment is established in which a wireless LAN terminal can be connected to a Bluetooth terminal and can communicate with the Bluetooth terminal through a hybrid wireless LAN/Bluetooth terminal.

When a Bluetooth signal is received, the process for converting the Bluetooth signal into a wireless LAN signal is the inverse of the process described above, and therefore the detailed explanation will be omitted herein.

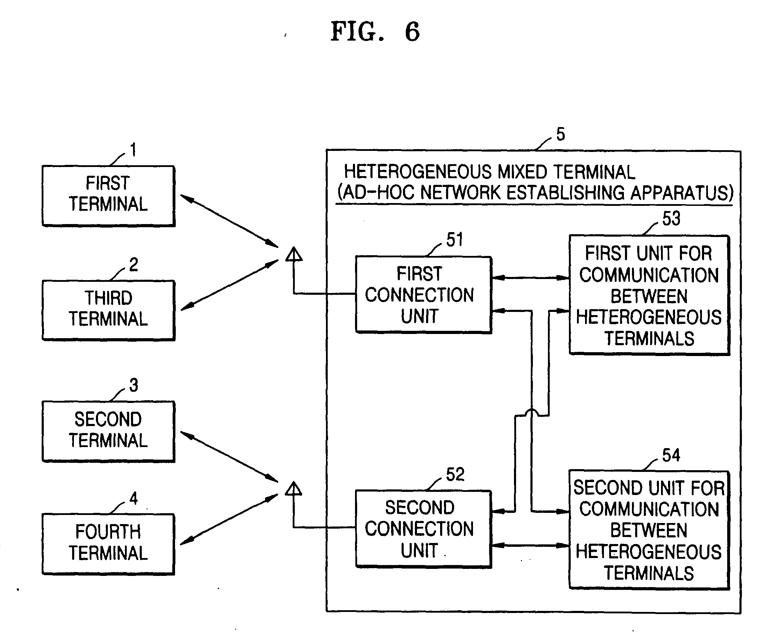

Referring to Figure 6, an apparatus for establishing an ad-hoc network 5 includes a first connection unit 51, a second connection unit 52, a first unit for communication between heterogeneous terminals 53 and a second unit for communication between heterogeneous terminals 54. The apparatus for establishing an ad-hoc network 5 is implemented in a hybrid terminal 5.

First, in the case where a first data packet is transmitted by a first terminal 1, in which a first protocol is implemented, to a second terminal 3, on which a second protocol is implemented, will now be explained.

The first connection unit 51 connects the hybrid terminal 5 to the first terminal 1. The hybrid terminal 5 includes a single layer portion that is obtained by unifying the upper layers common to the heterogeneous protocol stacks, a double layer portion that is comprises different lower layers for the supported protocols and a conversion layer which converts a packet formatted for one protocol stack into a packet formatted for another protocol stack and which is disposed between the single layer portion and the double layer portion. A first protocol stack is installed on the first terminal 1. While the hybrid terminal 5 can contain a protocol stack including a single layer portion and a double layer portion, as illustrated in Figure 3, it could also contain single and double layer portions according to protocols other than wireless LAN or Bluetooth.

A second connection unit 52 connects the hybrid terminal 5 to a second terminal 3, on which a second protocol stack is installed. Thus, the first terminal 1 and the second terminal 3 perform communication using different protocol stacks, respectively. That is, since the first terminal 1 and the second terminal 3 use different methods of communication, the first terminal 1 and the second terminal 3 cannot communicate directly with each other.

The first unit for communication between heterogeneous terminals 53 receives a first data packet from the first terminal 1. If the address in the destination address field, included in the first data packet, is not the address of the hybrid terminal, that is if the destination of the first data packet is not the hybrid terminal 5, the first protocol stack packet format of the first data packet is converted into the second protocol stack packet format in the conversion layer, and the first data packet converted into the second protocol stack packet format is transmitted to the connected second terminal 3. If the address written in the destination address field included in the first data packet is the address of the hybrid terminal, that is if the destination of the first data packet is the hybrid terminal 5, the first data packet is transferred to the single layer of the hybrid protocol stack. The hybrid terminal does not only relay information to heterogeneous terminals, it also functions as an independent terminal with its own address. Accordingly, if the destination of the first data packet is the hybrid terminal 5, the received data packet is transferred to the highest layer such that the packet can be processed appropriately for its purpose. If the destination of the first data packet is not the hybrid terminal 5, the first protocol stack packet format of the first data packet is converted into the second protocol stack packet format in the conversion layer and the first data packet converted into the second protocol stack packet format is transmitted to the connected second terminal 3. Here, the first protocol stack packet format means a packet format matching the first protocol stack, and the second protocol stack packet format means a packet format matching the second protocol stack. Since heterogeneous protocol stacks use packet formats different from each other, in order for heterogeneous terminals to communicate with each other, transmitted formats must be converted into formats useable by receiving terminals.

Next, a case in which a first data packet, transmitted by a fourth terminal 4, is transmitted to the hybrid terminal 5 or to a third terminal 2 will now be explained.

A first protocol stack is installed on the third terminal 2 and a second protocol stack is installed on the fourth terminal 4. The first connection unit 1 connects the hybrid terminal 5 and the third terminal 2. The second connection unit 2 connects the hybrid terminal 5 and the fourth terminal 4.

The second unit for communication between heterogeneous terminals 54 receives a second data packet from the connected fourth terminal 4. If the address written in the destination address field included in the second data packet is not the address of the hybrid terminal 5, that is, if the destination of the second data packet is not the hybrid terminal 5, the second protocol stack packet format of the second data packet is converted into the first protocol stack packet format in the conversion layer, and the data packet converted into the first protocol stack packet format is transmitted to the connected third terminal 2. If the address written in the destination address field included in the second data packet is the address of the heterogeneous mixed terminal, that is, if the destination of the second data packet is the hybrid terminal 5, the second data packet is transferred to the single layer portion of the hybrid protocol stack.

Generally, when communication methods mainly used at present are considered, the first protocol stack will be a wireless LAN protocol stack, the second protocol stack will be a Bluetooth protocol stack, the first terminal 1 and the third terminal 2 will be wireless LAN terminals, the second terminal 2 and the fourth terminal 4 will be Bluetooth terminals and the hybrid terminal will be a hybrid wireless LAN/Bluetooth terminal. In this case, the first connection unit 51 connects the hybrid wireless LAN/Bluetooth terminal 5, the first terminal 1 and the third terminal 2, according to the scanning, authorization and association processes of the IEEE 802.11 standard. When a wireless LAN terminal (a station conforming to an IEEE 802.11 standard) wants to connect with the hybrid wireless LAN/Bluetooth terminal, the wireless LAN terminal needs to obtain connection information, such as synchronization information, from the wireless LAN/Bluetooth mixed terminal.

According to the IEEE 802.11 standard, either of the following two methods can be used to connect the wireless LAN terminal and the hybrid wireless LAN/Bluetooth terminal. First, in a passive scanning method, in order to establish an ad-hoc network, the hybrid wireless LAN/Bluetooth terminal sets independent basic service set (IBSS) mod3, and periodically transmits a beacon frame containing connection information such as synchronization information. The wireless LAN terminal waits to receive the beacon frame. If the wireless LAN terminal receives the beacon frame, it connects with the hybrid wireless LAN/Bluetooth terminal using connection information included in the beacon frame. Second, in an active scanning method, the wireless LAN terminal tries to connect with the hybrid wireless LAN/Bluetooth terminal, by transmitting a probe request frame. If the probe request frame is received, the hybrid wireless LAN/Bluetooth mixed terminal transmits a probe response frame containing connection information, such as synchronization information. If the wireless LAN terminal receives the probe response frame, the wireless LAN terminal connects with the hybrid wireless LAN/Bluetooth terminal using the connection information included in the probe response frame. Through the authorization and association processes and others, the wireless LAN terminal and the hybrid wireless LAN/Bluetooth terminal can communicate data packets with each other.

The second connection unit 52 connects the hybrid wireless LAN/Bluetooth terminal 5, the second terminal 3 and the fourth terminal 4, according to a personal area network (PAN) profile process of the Bluetooth standard. A profile is a rule for using the Bluetooth protocol stack in a terminal and the PAN profile defines a rule for IP traffic. By using the PAN profile, an ad-hoc network can be established. According to the Bluetooth standard, any one of a number of Bluetooth terminals can lead trials for connection. When connected, the terminal which led the connection becomes a master and the terminal or terminals which are passively connected becomes slaves. At this time, if a transmitting Bluetooth terminal knows the address of a receiving Bluetooth terminal in advance, a trial to establish a connection is performed by transmitting a page message. If the address is not known in advance, a trial to establish a connection is performed by transmitting an inquiry message (mores strictly speaking, a baseband inquiry message).

By using these messages, it is confirmed whether or not there is a Bluetooth terminal around the transmitting terminal and, if it is confirmed that there is a Bluetooth terminal, it is confirmed whether or not this Bluetooth terminal provides a PAN profile using SDP. Since a hybrid wireless LAN/Bluetooth terminal provides a PAN profile, according to a procedure written in the PAN profile, the L2CAP channel is initialized, and BNEP commands are transmitted and received such that the BNEP layer is connected.

Once a connection is established through the process described above, if the hybrid wireless LAN/Bluetooth terminal desires to receive a data packet from a Bluetooth terminal, the Bluetooth terminal transmitting the data packet must be the master and the hybrid wireless LAN/Bluetooth terminal, receiving the data packet, must be a slave. Accordingly, master/slave switching must be performed.

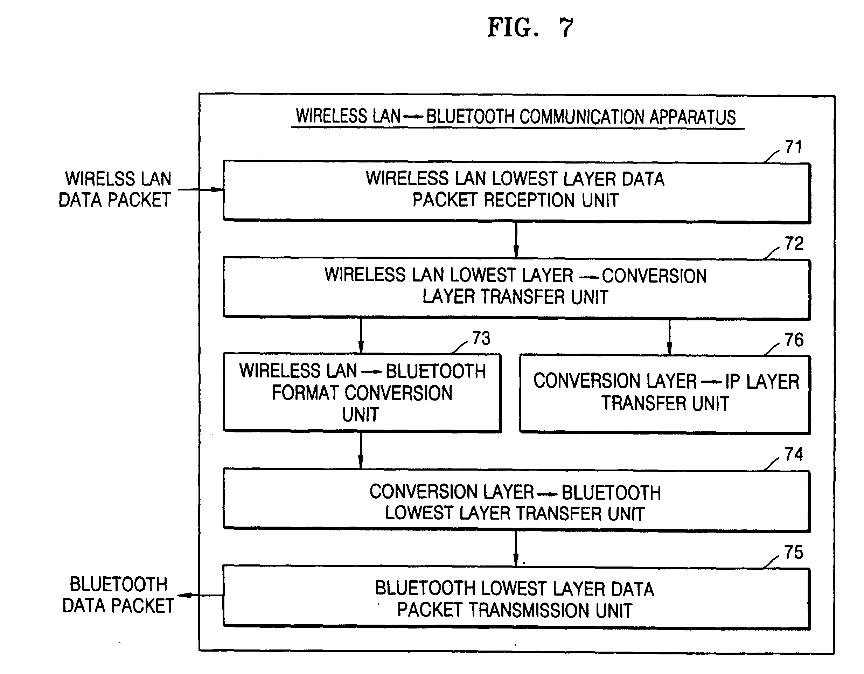

Referring to Figure 7, the wireless LAN→Bluetooth communication apparatus includes a wireless LAN lowest layer data packet reception unit 71, a wireless LAN lowest layer→conversion layer transfer unit 72, a wireless LAN→Bluetooth format conversion unit 73, a conversion layer→Bluetooth lowest layer transfer unit 74, a Bluetooth lowest layer data packet transmission unit 75 and a conversion layer→IP layer transfer unit 76. The wireless LAN→Bluetooth communication apparatus receives a wireless LAN data packet and processes it by itself or converts it into a Bluetooth data packet to be transmitted to a Bluetooth terminal.

As previously described, the hybrid wireless LAN/Bluetooth protocol stack includes a single layer portion that is obtained by unifying upper layers common to the wireless LAN protocol stack and the Bluetooth protocol stack, a double layer portion that is obtained by separating different lower layers and a conversion layer which converts a wireless LAN packet format into a Bluetooth packet format, and vice versa, and which is disposed between the single layer portion and the double layer portion. The wireless LAN lowest layer data packet reception unit 71 receives a wireless LAN data packet at the lowest layer in the wireless LAN protocol stack side as an input end. That is, it receives the data packet transmitted by the wireless LAN terminal with the RF layer of the wireless LAN protocol stack side as an input end.

The wireless LAN lowest layer-conversion layer transfer unit 72 then transfers the received data packet to the conversion layer. In the conversion layer, it is determined whether the data packet is transferred to the upper layers or whether the packet format is converted and transmitted to an external Bluetooth terminal. Accordingly, once a received data packet matches all the layers, such as the LLC layer, that the packet should pass through, all received data packets are transferred to the conversion layer. That is, a data packet received in the RF layer of the wireless LAN protocol stack side arrives at the conversion layer through the 802.11 a/b MAC and LLC layers.

If the MAC address written in the destination address field included in the data packet transferred to the conversion layer is not the MAC address of the wireless LAN/Bluetooth mixed terminal on which the hybrid wireless LAN/Bluetooth protocol stack is installed, the wireless LAN→Bluetooth packet format conversion unit 73 converts the wireless LAN packet format of the data packet into the Bluetooth packet format in the conversion layer. In the present invention, since a destination is determined by using a MAC address that is not a software-driven IP address, but a hardware address, it can be processed by hardware without referring to the network layer of the OSI reference model, and accordingly, the entire processing speed can be increased and the load on the system can be reduced.

Packet format conversion from wireless LAN to Bluetooth will now be explained in more detail. Referring to Figures 4 and 5, the source address field (the address 2 field shown in Figure 4) of the wireless LAN packet format is converted into the source address field of the Bluetooth packet format. The destination address field (the address 1 field shown in Figure 4) of the wireless LAN packet format is converted into the destination address field of the Bluetooth packet format. The ether type field of the wireless LAN packet format is converted into the networking protocol type field of the Bluetooth packet format. The frame body field of the wireless LAN packet format is converted into the payload field of the Bluetooth packet format.

The conversion layer→Bluetooth lowest layer transfer unit 74 transfers the data packet, which has been converted into the Bluetooth packet format in the conversion layer, to the lowest layer of the Bluetooth protocol stack side in the double layer of the hybrid wireless LAN/Bluetooth protocol stack through the upper layers of the Bluetooth protocol stack. That is, the data packet is transferred from the conversion layer to the RF layer through the BNEP, L2CAP, HCI, and baseband layers.

The Bluetooth lowest layer data packet transmission unit 75 then transmits the data packet. That is, the packet in the form of a Bluetooth signal is transmitted to the outside using the 2.4GHz band, frequency hopping method, G-FSK method, and TDD method.

Returning to the originally received wireless LAN data packet transferred to the conversion layer, if the MAC address written in the destination address field included in the data packet is the MAC address of the wireless LAN/Bluetooth mixed terminal, the conversion layer→IP layer transfer unit 76 transfers the data packet to the IP layer that is the lowest layer of the single layer portion of the hybrid wireless LAN/Bluetooth protocol stack. Thereafter, data packet transferred to the IP layer arrives at the corresponding application through the TCP/UDP and socket layers and is processed appropriately to its purpose.

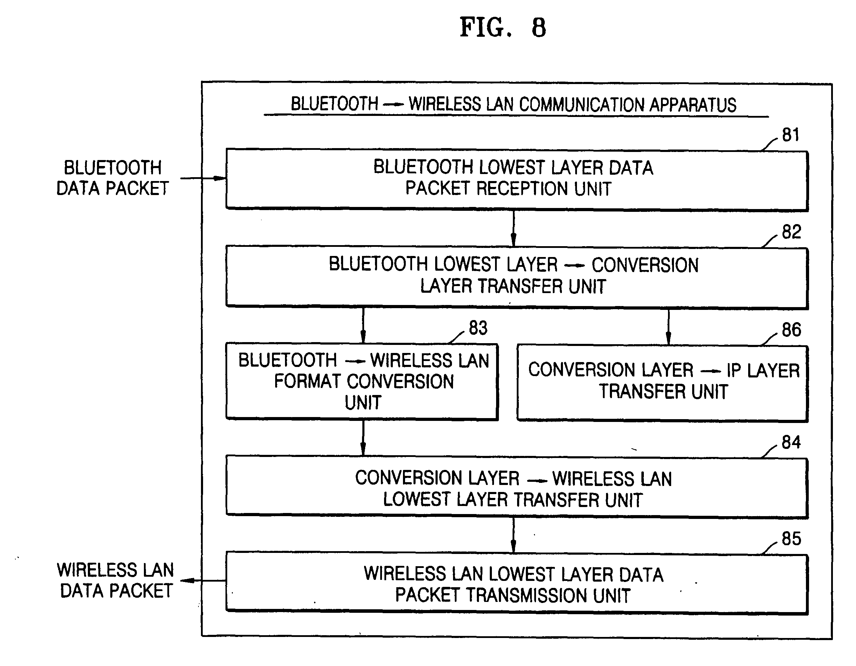

Referring to Figure 8, the Bluetooth→wireless LAN communication apparatus includes a Bluetooth lowest layer data packet reception unit 81, a Bluetooth lowest layer-conversion layer transfer unit 82, a Bluetooth→wireless LAN format conversion unit 83, a conversion layer→wireless LAN lowest layer transfer unit 84, a wireless LAN lowest layer data packet transmission unit 85, and a conversion layer→IP layer transfer unit 86. The Bluetooth→wireless LAN communication apparatus receives a Bluetooth data packet and processes it by itself or converts into a wireless LAN data packet to be transmitted to a wireless LAN terminal.

In the double layer portion of the hybrid wireless LAN/Bluetooth protocol stack, the Bluetooth lowest layer data packet reception unit 81 receives a data packet in the lowest layer in the Bluetooth protocol stack side as an input end. That is, it receives the data packet transmitted by the Bluetooth terminal in the RF layer of the Bluetooth protocol stack side as an input end.

The Bluetooth lowest layer→conversion layer transfer unit 82 then transfers the received data packet to the conversion layer. In the conversion layer, it is determined whether the data packet is transferred to the upper layers or whether the packet format is converted and transmitted to an external wireless LAN terminal. Accordingly, once a received data packet matches all the layers, such as the BNEP layer, that the packet should pass through, the received data packet is transferred to the conversion layer. That is, a data packet received in the RF layer of the Bluetooth protocol stack side as an input end arrives at the conversion layer through the baseband, HCI, L2CAP, and BNEP layers.

If the MAC address written in the destination address field included in the data packet transferred to the conversion layer is not the MAC address of the wireless LAN/Bluetooth mixed terminal on which the hybrid wireless LAN/Bluetooth protocol stack is installed, the Bluetooth→wireless LAN packet format conversion unit 83 converts the Bluetooth packet format of the data packet into the wireless LAN packet format in the conversion layer. As described above, since a destination is determined by using a MAC address that is not a software-driven IP address, but a hardware address, it can be processed by hardware without referring to the network layer of the OSI reference model, and accordingly, the entire processing speed can be increased and the load on the system can be reduced.

Packet format conversion from Bluetooth to wireless LAN will now be explained in more detail. Referring to Figures 4 and 5, the source address field of the Bluetooth packet format is converted into the source address field (the address 2 field shown in Figure 4) of the wireless LAN packet format. The destination address field of the Bluetooth packet format is converted into the destination address field (the address 1 field shown in Figure 4) of the wireless LAN packet format. The networking protocol type field of the Bluetooth packet format is converted into the ether type field of the wireless LAN packet format. The payload field of the Bluetooth packet format is converted into the frame body field of the wireless LAN packet format.

The conversion layer-wireless LAN lowest layer transfer unit 84 transfers the data packet which has been converted into the wireless LAN packet format in the conversion layer, to the lowest layer of the wireless LAN protocol stack side in the double layer of the hybrid wireless LAN/Bluetooth protocol stack through the upper layers of the wireless LAN protocol stack. That is, the data packet is transferred from the conversion layer arrives to the RF layer through the LLC and 802.11 a/b MAC layers.

The wireless LAN lowest layer data packet transmission unit 85 then transmits the data packet. That is, the packet, in the form of a wireless LAN signal, is transmitted to the outside using the 2.4 GHz band, binary phase shift keying (BPSK), quadrature phase shift keying (QPSK), 16-quadrature amplitude modulation (QAM), and 64-orthogonal frequency division multiplexing (OFDM).

Returning to the originally received Bluetooth packet transferred to the conversion layer, if the MAC address written in the destination address field included in the data packet is the MAC address of the wireless LAN/Bluetooth mixed terminal, the conversion layer-IP layer transfer unit 86 transfers the data packet to the IP layer that is the lowest layer of the single layer portion of the hybrid wireless LAN/Bluetooth protocol stack. Thereafter, the data packet transferred to the IP layer arrives at the corresponding application through the TCP/UDP, and socket layers, and is processed appropriately to its purpose.

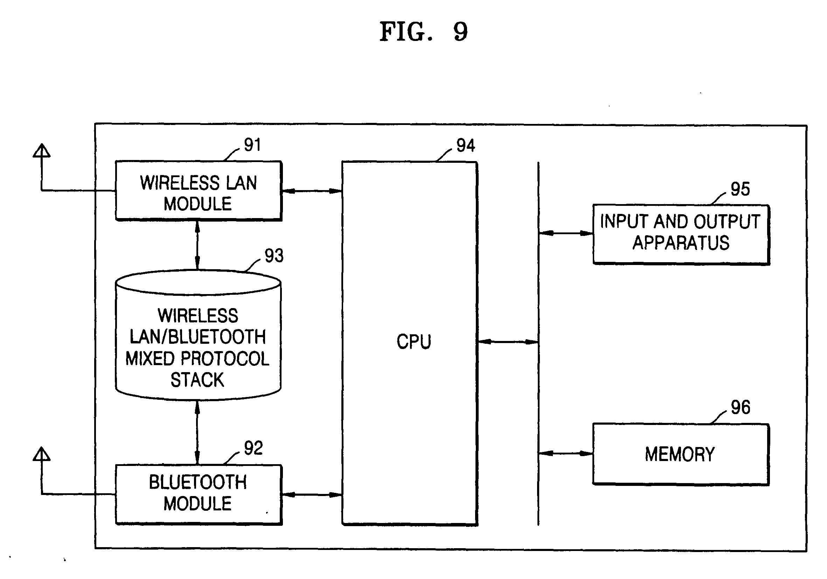

Referring to Figure 9, the implemented model of the wireless LAN/Bluetooth mixed terminal includes a wireless LAN module 91, a Bluetooth module 92, a hybrid wireless LAN/Bluetooth protocol stack 93, a CPU 94, an input and output apparatus 95, and a memory 96.

The wireless LAN module 91 has an embedded element which enables the wireless LAN/Bluetooth mixed terminal to operate a wireless LAN terminal. The Bluetooth module 92 has an embedded element which enables the wireless LAN/Bluetooth mixed terminal to operate a Bluetooth terminal. In the hybrid wireless LAN/Bluetooth protocol stack 93, the protocol stack shown in Figure 3 is stored. The CPU 94 controls the wireless LAN module 91 and the Bluetooth module 92, and processes received data packets. The input and output apparatus 95 receives data from a user and transfers the data to the CPU 94, or if data to be output to the user is included in a data packet, the input and output apparatus 95 receives the data from the CPU 94 and outputs it to the user. The memory 96 receives data from the CPU 94 and stores the data.

Through the respective organic operations of the elements described above, the apparatus for establishing an ad-hoc network, the wireless LAN-Bluetooth communication apparatus, and the Bluetooth-wireless LAN communication apparatus according to exemplary embodiments of the present invention are implemented.

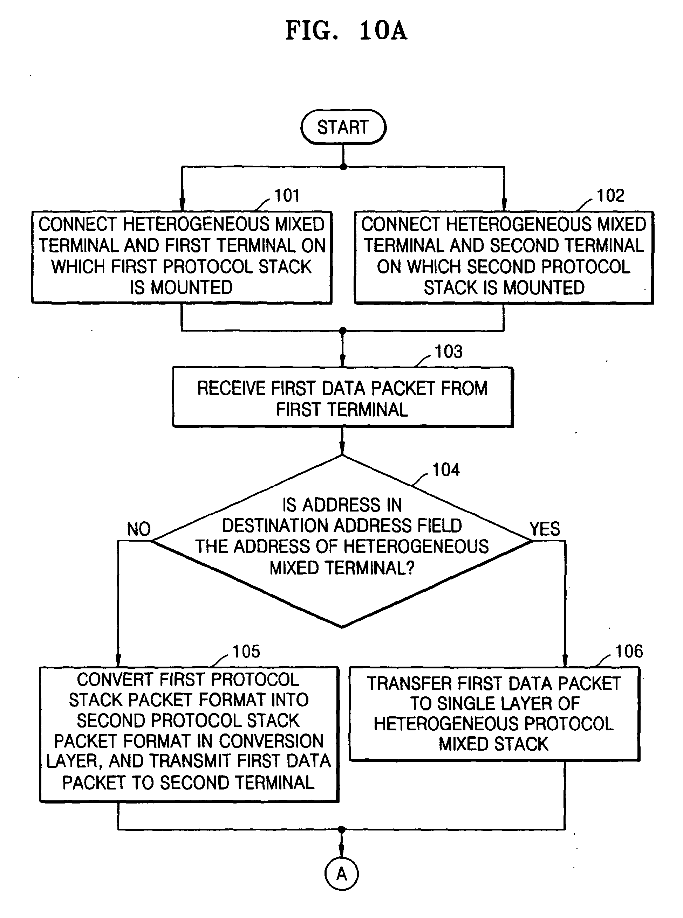

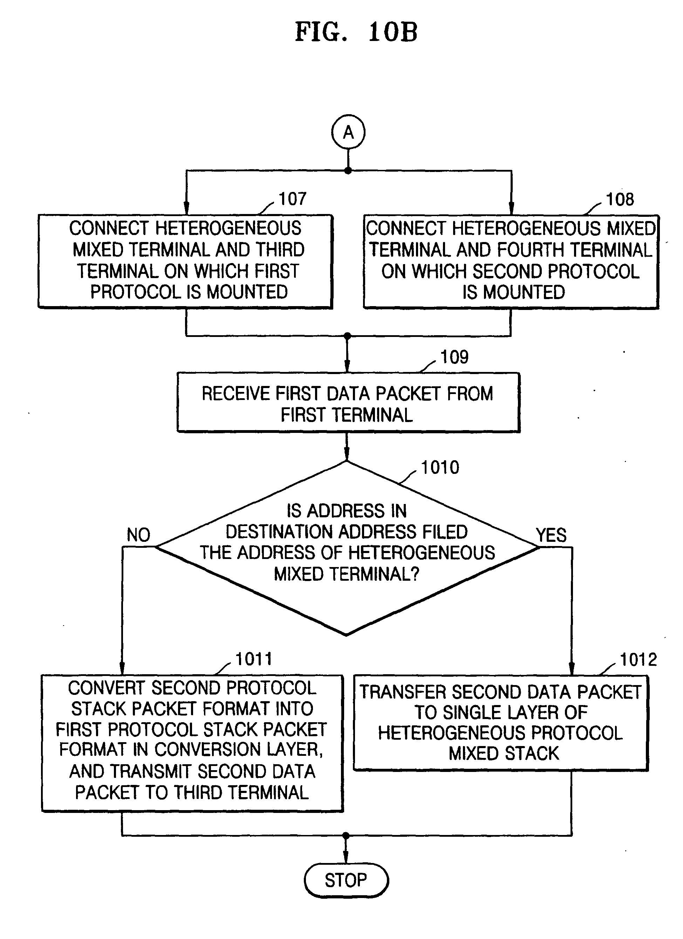

Referring to Figures 10A and 10B, a method for establishing an ad-hoc network will now be explained.

First, a case, in which a first data packet, transmitted by a first terminal on which a first protocol is installed, is transmitted to a hybrid terminal or to a second terminal on which a second protocol is installed, will now be explained.

The hybrid terminal includes a single layer portion obtained by unifying upper layers common to hybrid protocol stacks, a double layer portion obtained by separating different lower layers, and a conversion layer which converts a packet formatted for one protocol stack into a packet formatted for another protocol stack and which is disposed between the single layer portion and the double layer portion. In step 101, the hybrid terminal is connected to a first terminal, on which a first protocol stack is installed. In step 102, the hybrid terminal is connected to a second terminal, on which a second protocol stack is installed. A first data packet from the first terminal is received in step 103. If the address written in the destination address field included in the first data packet is not the address of the hybrid terminal in step 104, the first protocol stack packet format of the first data packet is converted into the second protocol stack packet format in the conversion layer, and the first data packet having been converted into the second protocol stack packet format is transmitted to the connected second terminal in step 105. If the address written in the destination address field included in the first data packet is the address of the hybrid terminal in step 104, the first data packet is transferred to the single layer portion of the hybrid protocol stack in step 106.

Next, a case in which a first data packet, transmitted by a fourth terminal on which a second protocol is installed, is transmitted to a hybrid terminal or to a third terminal, on which a first protocol stack t is installed will now be explained.

The hybrid terminal is connected to the third terminal, on which the first protocol stack is installed, in step 107. The heterogeneous mixed terminal is connected to the fourth terminal, on which a second protocol stack is installed, in step 108.
Then, the second data packet from the connected fourth terminal is received in step 109.

If the address written in the destination address field included in the second data packet is not the address of the hybrid terminal in step 1010, then the second protocol stack packet format of the second data packet is converted into the first protocol stack packet format in the conversion layer, and the data packet having been converted into the first protocol stack packet format is transmitted to the connected third terminal in step 1011. If the address written in the destination address field included in the second data packet is the address of the hybrid terminal, then the second data packet is transferred to the single layer portion of the hybrid protocol stack in step 1012.

According to this embodiment, if the first protocol stack is a wireless LAN protocol stack, the second protocol stack is a Bluetooth protocol stack, the first terminal and the third terminal are wireless LAN terminals, the second terminal and the fourth terminal are Bluetooth terminals, and the hybrid terminal is a hybrid wireless LAN/Bluetooth terminal, the hybrid terminal and the first terminal are connected according to the scanning, authorization, and association processes of the IEEE 802.11 standard in the step 101; the hybrid terminal and the second terminal are connected according to the PAN profile process of the Bluetooth standard in the step 102, the hybrid terminal and the third terminal are connected according to the scanning, authorization, and association processes of the IEEE 802.11 standard in the step 107, and the hybrid terminal and the fourth terminal are connected according to the PAN profile process of the Bluetooth standard in the step 108.

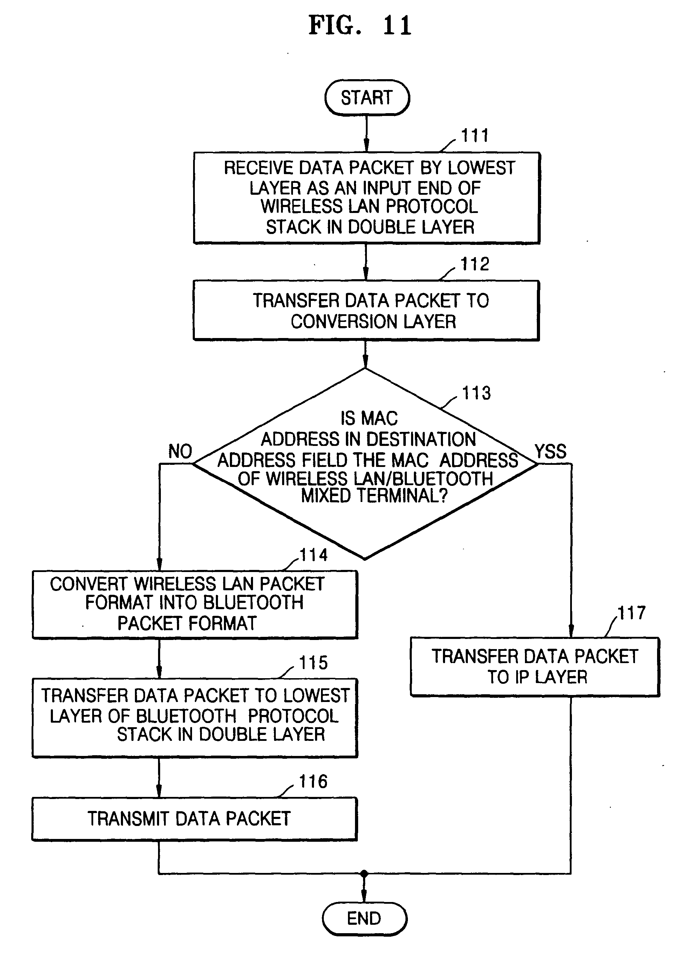

Referring to Figure 11, the wireless LAN→Bluetooth communication method will now be explained.

In the double layer portion of the hybrid wireless LAN/Bluetooth protocol stack, a data packet is received in the lowest layer of the wireless LAN protocol stack side as an input end in step 111. Then, the received data packet is transferred to the conversion layer in step 112. If the MAC address written in the destination address field included in the data packet transferred to the conversion layer is not the MAC address of the wireless LAN/Bluetooth mixed terminal on which the hybrid wireless LAN/Bluetooth protocol stack is mounted in step 113, the wireless LAN packet format of the data packet is converted into the Bluetooth packet format in the conversion layer in step 114. At this time, the source address field of the wireless LAN packet format is converted into the source address field of the Bluetooth packet format. The destination address field of the wireless LAN packet format is converted into the destination address field of the Bluetooth packet format. The ether type field of the wireless LAN packet format is converted into the networking protocol type field of the Bluetooth packet format. The frame body field of the wireless LAN packet format is converted into the payload field of the Bluetooth packet format.

Then, the data packet having been converted into the Bluetooth packet format in the conversion layer, is transferred to the lowest layer of the Bluetooth protocol stack side in the double layer portion of the hybrid wireless LAN/Bluetooth protocol stack in step 115. Then, the data packet is transmitted by the lowest layer as an output end in step 116. If the MAC address written in the destination address field included in the data packet is the MAC address of the wireless LAN/Bluetooth mixed terminal in step 113, the data packet is transferred to the IP layer that is the lowest layer of the single layer of the hybrid wireless LAN/Bluetooth protocol stack in step 117.

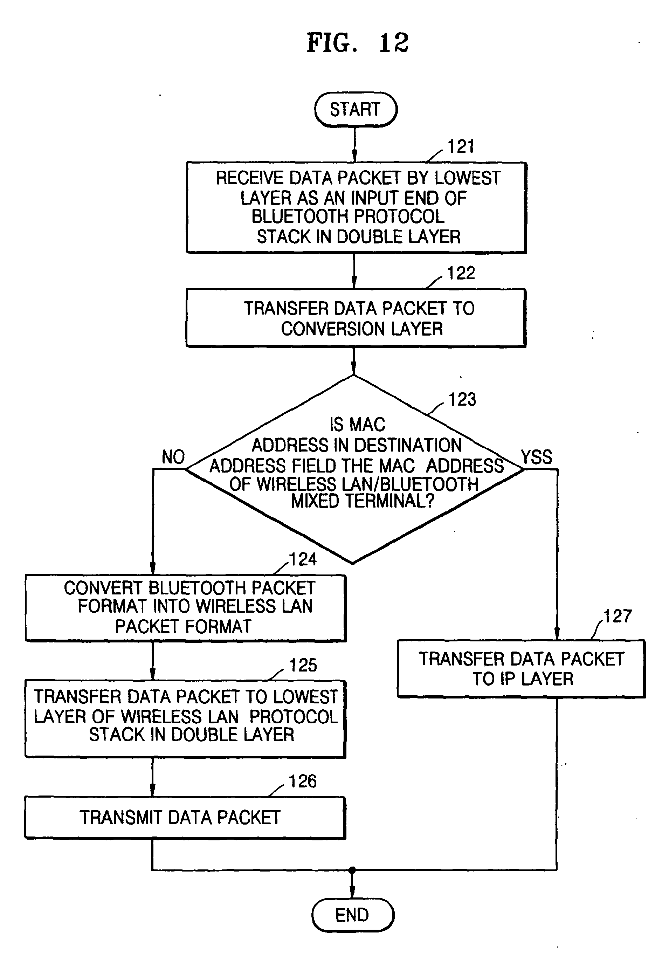

Figure 12 is a flowchart of the steps performed by a method for Bluetooth→wireless LAN communications according to an embodiment of the present invention.

Referring to Figure 12, the Bluetooth→wireless LAN communication method will now be explained.

In the double layer portion of the hybrid wireless LAN/Bluetooth protocol stack, a data packet is received in the lowest layer of the Bluetooth protocol stack side as an input end in step 121. Then, the received data packet, is transferred to the conversion layer in step 122. If the MAC address written in the destination address field included in the data packet transferred to the conversion layer is not the MAC address of the hybrid wireless LAN/Bluetooth terminal on which the hybrid wireless LAN/Bluetooth protocol stack is installed in step 123, then, the Bluetooth packet format of the data packet is converted into the wireless LAN packet format in the conversion layer in step 124. At this time, the source address field of the Bluetooth packet format is converted into the source address field of the wireless LAN packet format. The destination address field of the Bluetooth packet format is converted into the destination address field of the wireless LAN packet format.
The networking protocol type field of the Bluetooth packet format is converted into the ether type field of the wireless LAN packet format. The payload field of the Bluetooth packet format is converted into the frame body field of the wireless LAN packet format. Then, the data packet which has been converted into the wireless LAN packet format in the conversion layer, is transferred to the lowest layer of the wireless LAN protocol stack side in the double layer portion of the hybrid wireless LAN/Bluetooth protocol stack in step 125. Next, the data packet w is transmitted by the lowest layer as an output end in step 126. If the MAC address written in the destination address field included in the data packet is the MAC address of the wireless LAN/Bluetooth mixed terminal in step 123, the data packet is transferred to the IP layer that is the lowest layer of the single layer portion of the hybrid wireless LAN/Bluetooth protocol stack in step 127.

By enabling this communication between heterogeneous terminals, an ad-hoc network in which a plurality of heterogeneous terminals can freely communicate with each other can be established. More specifically, by relaying a wireless LAN terminal and a Bluetooth terminal, which are representative heterogeneous terminals, according to the present invention, communications between the wireless LAN terminal and the Bluetooth terminal are enabled, and an ad-hoc network, in which a plurality of wireless LAN terminals and a plurality of Bluetooth terminals can freely communicate with each other, can be established. In particular, since a destination is determined by using a MAC address that is a hardware address and not a software-driven IP address, the address can be processed by hardware without referring to the network layer of the OSI reference model. Accordingly, processing speed can be increased and the load on the system can be reduced.

The above-described embodiments can be written as computer programs and can be implemented in general-use computers that execute the programs from a computer readable recording medium.

The structure of data as described in the above embodiments of the present invention can be recorded on a computer readable recording medium through a variety of means.

Examples of the computer readable recording medium can include, but are not limited to: magnetic storage media (e.g., ROM, floppy disks, hard disks, etc.), optical recording media (e.g., CD-ROMs, or DVDs). The present invention may also be embodied in electric or electromagnetic signals representing computer control codes.

## Claims

1. A network terminal device comprising:
first transceiver means (91) for communication according to a first protocol;
second transceiver means (92) for communication according to a second protocol; and
processing means (94) configured for implementing protocol stack means (93) for said protocols, and for implementing a protocol conversion process, for conversion between said protocols, at an intermediate layer (33) in said stack means (93) so that signals which are received through one of the transceiver means according to one of the protocols undergo protocol conversion in said intermediate layer (33) by said protocol conversion process and transmission by the other of the transceiver means according to the other protocol,
wherein the protocol stack means comprises a single layer portion comprising unified upper layers (36,35,34) common to a first protocol stack and a second protocol stack; and a bifurcated portion comprising separated lower layers (311,312,313,325,324,323,322,321) which differ between the first protocol stack and the second protocol stack, wherein the first and second protocols are first and second protocol packet formats respectively and wherein the intermediate layer (33) is disposed between the single layer portion and the bifurcated portion and comprises a conversion layer which is arranged to convert the format of a data packet between the first protocol packet format and the second protocol packet format.

2. The device according to claim 1, wherein said intermediate layer (33) is below layer 4 of the OSI network model.

3. The device according to claim 1 or 2, wherein the processing means (94) is configured such that received signals which are addressed to the device are passed up through said intermediate layer (33) and received signals which are not addressed to the device undergo protocol conversion in said intermediate layer (33).

4. The device according to any preceding claim, wherein the transceiver means (91, 92) implement protocol stack layers below those implemented by the processing means (94).

5. The device according to any preceding claim, wherein the first protocol is an IEEE 802.11 protocol.

6. The device according to any preceding claim, wherein the second protocol is Bluetooth.

7. The device according to any preceding claim, wherein the processing means (94) is programmable with application programs which communicate via said protocol stack means (93).

8. The device of claim 1, wherein the single layer portion comprises an Internet protocol layer, a transmission control protocol/user datagram protocol layer, and a socket layer stacked in order from the bottom.

9. The device of claim 1, wherein
the first protocol stack is a wireless LAN protocol stack,
the second protocol stack is a Bluetooth protocol stack,
the first protocol packet format is a wireless LAN packet format, and
the second protocol packet format is a Bluetooth packet format.

10. The device of claim 1, wherein
the bifurctaed portion is divided into a Bluetooth protocol stack side and a wireless LAN protocol stack side;
the wireless LAN protocol stack side comprises a radio frequency layer, an IEEE 802.11a/b MAC layer, and a logical link control layer, stacked in order from the bottom; and
the Bluetooth protocol stack side comprises an RF layer, a baseband layer, a host controller interface layer, a logical link control and adaptation protocol layer, and a Bluetooth network encapsulation protocol layer, stacked in order from the bottom.

11. A method of communication between heterogeneous protocols, the method comprising:
receiving a data packet in the lowest layer of a first protocol stack;
transferring the received data packet to a conversion layer (33) at an intermediate position in said first protocol stack;
at the conversion layer, converting a first protocol packet format of the data packet into a second protocol packet format; and
transferring the data packet converted into the second protocol packet format to the lowest layer of a second protocol stack; and
transmitting a data packet in the second protocol packet format from the lowest level of the second protocol stack,
wherein the first and the second protocol stacks are common in unified layers in a single layer portion and are different in a separated lower layers in a bifurcated portion, and the conversion layer is disposed below the single layer portion and is disposed above the bifurcated portion.

12. The method of claim 11, further comprising:
determining if the MAC address written in a destination address field included in the data packet is the MAC address of an apparatus performing the method of communication;
performing the converting if the MAC address written in the destination address field included in the data packet is not the MAC address of the apparatus performing the method of communication.

13. The method of claim 11, wherein converting the packet format comprises,
converting the source address field of the first protocol packet format into the source address field of the second protocol packet format, and
converting the destination address field of the first protocol packet format into the destination address field of the second protocol packet format.

14. The method of claim 11, wherein
the first protocol stack is a Bluetooth protocol stack,
the first protocol packet format is a Bluetooth packet format, and
the second protocol packet format is a wireless LAN packet format.

15. The method of claim 11, wherein converting the packet format comprises,
converting a networking protocol type field of the Bluetooth packet format into an ether type field of the wireless LAN packet format, and
converting a payload field of the Bluetooth packet format into a frame body field of the wireless LAN packet format.

16. The method of claim 11, further comprising:
if the MAC address written in the destination address field included in the data packet transferred to the conversion layer is the MAC address of the apparatus performing the method of communication, transferring the data packet to the IP layer of a protocol stack mounted on the apparatus performing the method of communication.

17. A method of establishing an ad-hoc network comprising:
accessing a first terminal on which a first terminal protocol stack is installed;
accessing a second terminal on which a second terminal protocol stack is installed;
receiving a data packet, formatted for the first terminal protocol stack, from the first terminal; and
in respect of the received data packet, performing the steps of claim 11.

18. The method of claim 17, further comprising:
determining if the address written in a destination address field included in the data packet is the address of an apparatus performing the method of establishing an ad-hoc network;
wherein if the address written in the destination address field included in the data packet is not the address of the apparatus performing the method of establishing an ad-hoc network, the converting is performed.

19. The method of claim 17, further comprising:
determining if the address written in a destination address field included in the data packet is the address of an apparatus performing the method of establishing an ad-hoc network; and
if the address written in the destination address field included in the data packet is the address of the apparatus performing the method of establishing an ad-hoc network, transferring the data packet to an upper later of a protocol stack installed on the apparatus performing the method of establishing an ad-hoc network.

20. The method of claim 17, wherein the first protocol stack is a wireless local area network protocol stack, and the second protocol stack is a Bluetooth protocol stack.

21. The method of claim 20, wherein accessing the first terminal, comprises accessing according to the scanning, authentication, and combining processes of the IEEE 802.11 standard.

22. The method of claim 20, wherein accessing the second terminal, comprises accessing according to a personal area network profile process of the Bluetooth standard.

23. A signal representing program codes for configuring the processing means (94) of a network terminal device to perform the method of any of claims 11 to 22.

24. A data carrier having a signal according to claim 23 recorded therein or thereon.

## Patentansprüche

1. Netzwerk-Endgerätvorrichtung, die umfasst:
eine erste Sendeempfängereinrichtung (91) zur Kommunikation gemäß einem ersten Protokoll;
eine zweite Sendeempfängereinrichtung (92) zur Kommunikation gemäß einem zweiten Protokoll; und
eine Verarbeitungseinrichtung (94), die so konfiguriert ist, dass sie Protokollstapeleinrichtungen (93) für die Protokolle implementiert und einen Protokollumwandlungsprozess zur Umwandlung zwischen den Protokollen auf einer Zwischenschicht (33) in der Stapeleinrichtung (93) implementiert, so dass Signale, die über eine der Sendeempfängereinrichtungen gemäß einem der Protokolle empfangen werden, Protokollumwandlung in der Zwischenschicht (33) durch den Protokollumwandlungsprozess und Senden durch die andere der Sendeempfängereinrichtungen gemäß dem anderen Protokoll unterzogen werden,
wobei die Protokollstapeleinrichtung einen Abschnitt aus einer einzelnen Schicht, der vereinigte obere Schichten (36, 35, 34) umfasst, die einem ersten Protokollstapel und einem zweiten Protokollstapel gemeinsam sind, und einen geteilten Abschnitt umfasst, der getrennte untere Schichten (311, 312, 313, 325, 324, 323, 322, 321) umfasst, die sich zwischen dem ersten Protokollstapel und dem zweiten Protokollstapel unterscheiden, wobei das erste und das zweite Protokoll ein Paketformat des ersten bzw. des zweiten Protokolls sind und die Zwischenschicht (33) zwischen dem Abschnitt aus der einzelnen Schicht und dem geteilten Abschnitt angeordnet ist und eine Umwandlungsschicht umfasst, die so eingerichtet ist, dass sie das Format eines Datenpaketes zwischen dem Paketformat des ersten Protokolls und dem Paketformat des zweiten Protokolls umwandelt.

2. Vorrichtung nach Anspruch 1, wobei die Zwischenschicht (33) unterhalb von Schicht 4 des OSI-Netzwerkmodells liegt.

3. Vorrichtung nach Anspruch 1 oder 2, wobei die Verarbeitungseinrichtung (94) so konfiguriert ist, dass empfangene Signale, die an die Vorrichtung adressiert sind, durch die Zwischenschicht (33) nach oben geleitet werden, und empfangene Signale, die nicht an die Vorrichtung adressiert sind, Protokollumwandlung in der Zwischenschicht (33) unterzogen werden.

4. Vorrichtung nach einem der vorangehenden Ansprüche, wobei die Sendeempfängereinrichtungen (91, 92) Protokollstapel-Schichten unterhalb derjenigen implementieren, die durch die Verarbeitungseinrichtung (94) implementiert werden.

5. Vorrichtung nach einem der vorangehenden Ansprüche, wobei das erste Protokoll ein IEEE 802.11-Protokoll ist.

6. Vorrichtung nach einem der vorangehenden Ansprüche, wobei das zweite Protokoll Bluetooth ist.

7. Vorrichtung nach einem der vorangehenden Ansprüche, wobei die Verarbeitungseinrichtung (94) mit Anwendungsprogrammen programmiert werden kann, die über die Protokollstapeleinrichtung (93) kommunizieren.

8. Vorrichtung nach Anspruch 1, wobei der Abschnitt aus der einzelnen Schicht eine Internet-Protokollschicht, eine TCP/UDP-Protokollschicht und eine Socket-Schicht umfasst, die der Reihe nach von unten übereinander geschichtet sind.

9. Vorrichtung nach Anspruch 1, wobei
der erste Protokollstapel ein WLAN-Protokollstapel ist,
der zweite Protokollstapel ein Bluetooth-Protokollstapel ist,
das Paketformat des ersten Protokolls ein WLAN-Paketformat ist, und
das Paketformat des zweiten Protokolls ein Bluetooth-Paketformat ist.

10. Vorrichtung nach Anspruch 1, wobei
der geteilte Abschnitt in eine Seite des Bluetooth-Protokollstapels und eine Seite des WLAN-Protokollstapels geteilt ist;
die Seite des WLAN-Protokollstapels eine erste Funkfrequenzschicht, eine IEEE 802.1 1a/b-MAC-Schicht und eine LLC (logical link control)-Schicht umfasst, die der Reihe nach von unten übereinander geschichtet sind; und
die Seite des Bluetooth-Protokollstapels eine RF-Schicht, eine Basisband-Schicht, eine Host-Controller-Schnittstellenschicht, eine L2CAP (logical link control and adaption protocol)-Schicht sowie eine BNEP (Bluetooth network encapsulation)-Schicht umfasst, die der Reihe nach von unten übereinander geschichtet sind.

11. Verfahren zur Kommunikation zwischen heterogenen Protokollen, wobei das Verfahren umfasst:
Empfangen eines Datenpaketes in der untersten Schicht eines ersten Protokollstapels;
Übertragen des empfangenen Datenpaketes zu einer Umwandlungsschicht (33) an eine Zwischenposition in dem ersten Protokollstapel;
Umwandeln eines Paketformates eines ersten Protokolls des Datenpaketes in ein Paketformat eines zweiten Protokolls in der Umwandlungsschicht; und
Übertragen des in das Paketformat des zweiten Protokolls umgewandelten Datenpaketes zu der untersten Schicht eines zweiten Protokollstapels; und
Senden eines Datenpaketes in dem Paketformat des zweiten Protokolls von der untersten Ebene des zweiten Protokollstapels,
wobei der erste und der zweite Protokollstapel vereinigten Schichten in einem Abschnitt aus einer einzelnen Schicht gemeinsam sind und in getrennten unteren Schichten in einem geteilten Abschnitt verschieden sind und die Umwandlungsschicht unterhalb des Abschnitts aus der einzelnen Schicht angeordnet ist und oberhalb des geteilten Abschnitts angeordnet ist.

12. Verfahren nach Anspruch 11, das des Weiteren umfasst:
Feststellen, ob die in ein Zieladressenfeld, das in dem Datenpaket enthalten ist, geschriebene MAC-Adresse die MAC-Adresse einer Vorrichtung ist, die das Kommunikationsverfahren durchführt;
Durchführen des Umwandelns, wenn die in das Zieladressenfeld, das in dem Datenpaket enthalten ist, geschriebene Zieladresse nicht die MAC-Adresse der Vorrichtung ist, die das Kommunikationsverfahren durchführt.

13. Verfahren nach Anspruch 11, wobei Umwandeln des Paketformates umfasst:
Umwandeln des Quellenadressenfeldes des Paketformates des ersten Protokolls in das Quellenadressenfeld des Paketformates des zweiten Protokolls, und
Umwandeln des Zieladressenfeldes des Paketformates des ersten Protokolls in das Zieladressenfeld des Paketformates des zweiten Protokolls.

14. Verfahren nach Anspruch 11, wobei
der erste Protokollstapel ein Bluetooth-Protokollstapel ist,
das Paketformat des ersten Protokolls ein Bluetooth-Paketformat ist, und
das Paketformat des zweiten Protokolls ein WLAN-Paketformat ist.

15. Verfahren nach Anspruch 11, wobei Umwandeln des Paketformates umfasst:
Umwandeln des Netzwerk-Protokolltyp-Feldes des Bluetooth-Paketformats in ein Ether-Typ-Feld des WLAN-Paketformats, und
Umwandeln eines Payload-Feldes des Bluetooth-Paketformats in ein Frame-Body-Feld des WLAN-Paketformats.

16. Verfahren nach Anspruch 11, das des Weiteren umfasst:
wenn die in das Zieladressenfeld, das in dem zu der Umwandlungsschicht übertragenen Datenpaket enthalten ist, geschriebene MAC-Adresse die MAC-Adresse der Vorrichtung ist, die das Kommunikationsverfahren durchführt, Übertragen des Datenpaketes zu der IP-Schicht eines Protokollstapels, der an der Vorrichtung angebracht ist, die das Kommunikationsverfahren durchführt.

17. Verfahren zum Einrichten eines Ad-hoc-Netzwerks, das umfasst:
Zugreifen auf ein erstes Endgerät, an dem ein Protokollstapel eines ersten Endgerätes installiert ist;
Zugreifen auf ein zweites Endgerät, an dem ein Protokollstapel des zweiten Endgerätes installiert ist;
Empfangen eines Datenpaketes, das für den Protokollstapel des ersten Endgerätes formatiert ist, von dem ersten Endgerät; und
Durchführen der Schritte von Anspruch 11 in Bezug auf das empfangene Datenpaket.

18. Verfahren nach Anspruch 17, das des Weiteren umfasst:
Feststellen, ob die in ein Zieladressenfeld, das in dem Datenpaket enthalten ist, geschriebene Adresse die Adresse einer Vorrichtung ist, die das Verfahren zum Einrichten eines Ad-hoc-Netzwerks durchführt;
wobei, wenn die in das Zieladressenfeld, das in dem Datenpaket enthalten ist, geschriebene Adresse nicht die Adresse der Vorrichtung ist, die das Verfahren zum Einrichten eines Ad-hoc-Netzwerks durchführt, die Umwandlung durchgeführt wird.

19. Verfahren nach Anspruch 17, das des Weiteren umfasst:
Feststellen, ob die in ein Zieladressenfeld, das in dem Datenpaket enthalten ist, geschriebene Adresse die Adresse einer Vorrichtung ist, die das Verfahren zum Herstellen eines Ad-hoc-Netzwerks durchführt; und
wenn die in das Zieladressenfeld, das in dem Datenpaket enthalten ist, geschriebene Adresse die Adresse der Vorrichtung ist, die das Verfahren zum Einrichten eines Ad-hoc-Netzwerks durchführt, Übertragen des Datenpaketes zu einer oberen Schicht eines Protokollstapels, der an der Vorrichtung installiert ist, die das Verfahren zum Einrichten eines Ad-hoc-Netzwerks durchführt.

20. Verfahren nach Anspruch 17, wobei der erste Protokollstapel ein WLAN-Protokollstapel ist und der zweite Protokollstapel ein Bluetooth-Protokollstapel ist.

21. Verfahren nach Anspruch 20, wobei Zugreifen auf das erste Endgerät Zugreifen entsprechend den Prozessen des Scannens, Authentifizierens und Kombinierens des IEEE 802.11-Standards umfasst.

22. Verfahren nach Anspruch 20, wobei Zugreifen auf das zweite Endgerät Zugreifen gemäß einem PAN-Profil-Prozess des Bluetooth-Standards umfasst.

23. Signal, das Programmcodes zum Konfigurieren der Verarbeitungseinrichtung (94) einer Netzwerk-Endgerätvorrichtung zum Durchführen des Verfahrens nach einem der Ansprüche 11 bis 22 repräsentiert.

24. Datenträger, in oder auf dem ein Signal nach Anspruch 23 aufgezeichnet ist.

## Revendications

1. Dispositif de terminal de réseau comportant :
un premier moyen émetteur - récepteur (91) pour une communication selon un premier protocole ;
un second moyen émetteur - récepteur (92) pour une communication selon un second protocole ; et
un moyen de traitement (94) configuré pour mettre en oeuvre un moyen de pile de protocoles (93) pour lesdits protocoles, et pour mettre en oeuvre un processus de conversion de protocoles, pour une conversion entre lesdits protocoles, au niveau d'une couche intermédiaire (33) dans ledit moyen de pile (93) de sorte que des signaux, qui sont reçus par l'un des moyens émetteurs - récepteurs selon l'un des protocoles, subissent une conversion de protocoles au niveau de ladite couche intermédiaire (33) au moyen dudit processus de conversion de protocoles et une transmission via l'autre des moyens émetteurs - récepteurs selon l'autre protocole,
dans lequel le moyen de pile de protocoles comporte une partie de couche unique comportant des couches supérieures unifiées (36, 35, 34) communes à une première pile de protocoles et à une seconde pile de protocoles ; et une partie bifurquée comportant des couches inférieures séparées (311, 312, 313, 325, 324, 323, 322, 321) qui diffèrent entre la première pile de protocoles et la seconde pile de protocoles, dans lequel les premier et second protocoles sont des premier et second formats de paquet de protocoles, respectivement, et dans lequel la couche intermédiaire (33) est agencée entre la partie de couche unique et la partie bifurquée et comporte une couche de conversion qui est agencée pour convertir le format d'un paquet de données entre le premier format de paquet de protocoles et le second format de paquet de protocoles.

2. Dispositif selon la revendication 1, dans lequel ladite couche intermédiaire (33) se situe sous la couche 4 du modèle de réseau OSI.

3. Dispositif selon la revendication 1 ou 2, dans lequel le moyen de traitement (94) est configuré pour que des signaux reçus qui sont adressés au dispositif sont transmis à travers ladite couche intermédiaire (33) et des signaux reçus qui ne sont pas adressés au dispositif subissent une conversion de protocoles au sein de ladite couche intermédiaire (33).

4. Dispositif selon l'une quelconque des revendications précédentes, dans lequel les moyens émetteurs - récepteurs (91, 92) mettent en oeuvre des couches de pile de protocoles en dessous de celles mises en oeuvre par le moyen de traitement (94).

5. Dispositif selon l'une quelconque des revendications précédentes, dans lequel le premier protocole est un protocole IEEE 802.11.

6. Dispositif selon l'une quelconque des revendications précédentes, dans lequel le second protocole est un protocole Bluetooth.

7. Dispositif selon l'une quelconque des revendications précédentes, dans lequel le moyen de traitement (94) est programmable avec des programmes d'application qui communiquent via ledit moyen de pile de protocoles (93).

8. Dispositif selon la revendication 1, dans lequel la partie de couche unique comporte une couche de protocole Internet, une couche de protocole de commande de transmission / de protocole de datagramme utilisateur, et une couche d'échange empilées dans l'ordre à partir de la base.

9. Dispositif selon la revendication 1, dans lequel
la première pile de protocoles est une pile de protocoles de réseau local (LAN) sans fil,
la seconde pile de protocoles est une pile de protocoles de technologie Bluetooth,
le premier format de paquet de protocoles est un format de paquet de réseau local (LAN), et
le second format de paquet de protocoles est un format de paquet de technologie Bluetooth.

10. Dispositif selon la revendication 1, dans lequel
la partie bifurquée est divisée en un côté de pile de protocoles de technologie Bluetooth et un côté de pile de protocoles de réseau local (LAN) sans fil ;
le côté pile de protocoles de réseau local (LAN) sans fil comporte une couche de radiofréquence, une couche IEEE 802.11a/b MAC, et une couche de contrôle de liaison logique, empilées dans l'ordre à partir de la base ; et
le côté pile de protocoles de technologie Bluetooth comporte une couche de radiofréquence (RF), une couche de bande de base, une couche d'interface de contrôleur hôte, une couche de protocole d'adaptation et de contrôle de liaison logique, et une couche de protocole d'encapsulation de réseau Bluetooth, empilées dans l'ordre à partir de la base.

11. Procédé de communication entre des protocoles hétérogènes, le procédé comportant les étapes consistant à :
recevoir un paquet de données dans la couche la plus basse d'une première pile de protocoles ;
transférer le paquet de données reçu à une couche de conversion (33), à une position intermédiaire dans ladite première pile de protocoles ;
au niveau de la couche de conversion, convertir un premier format de paquet de protocoles du paquet de données en un second format de paquet de protocoles ; et
transférer le paquet de données converti en le second format de paquet de protocoles à la couche la plus basse de la seconde pile de protocoles ; et
transmettre un paquet de données dans le second format de paquet de protocoles à partir du niveau le plus bas de la seconde pile de protocoles,
dans lequel les première et seconde piles de protocole sont communes dans des couches unifiées dans une partie de couche unique et sont différentes dans des couches inférieures séparées dans une partie bifurquée, et la couche de conversion est agencée au-dessous de la partie de couche unique et est agencée au-dessus de la partie bifurquée.

12. Procédé selon la revendication 11, comportant en outre les étapes consistant à :
déterminer si l'adresse MAC écrite dans un champ d'adresse de destination inclus dans le paquet de données est l'adresse MAC d'un dispositif exécutant le procédé de communication ;
exécuter la conversion si l'adresse MAC écrite dans le champ d'adresse de destination inclus dans le paquet de données n'est pas l'adresse MAC du dispositif exécutant le procédé de communication.

13. Procédé selon la revendication 11, dans lequel l'étape de conversion du format de paquet comporte les étapes consistant à,
convertir le champ d'adresse source du premier format de paquet de protocoles en le champ d'adresse source du second format de paquet de protocoles, et
convertir le champ d'adresse de destination du premier format de paquet de protocoles en le champ d'adresse de destination du second format de paquet de protocoles.

14. Procédé selon la revendication 11, dans lequel
la première pile de protocoles est une pile de protocoles de technologie Bluetooth,
le premier format de paquet de protocoles est un format de paquet de technologie Bluetooth, et
le second format de paquet de protocoles est un format de paquet de réseau local (LAN) sans fil.

15. Procédé selon la revendication 11, dans lequel l'étape de conversion du format de paquet comporte les étapes consistant à,
convertir un champ de type de protocole de mise en réseau du format de paquet de technologie Bluetooth en un autre champ de type du format de paquet de réseau local (LAN) sans fil, et
convertir un champ de données utiles d'un format de paquet de technologie Bluetooth en un champ de corps de trame du format de paquet de réseau local (LAN) sans fil.

16. Procédé selon la revendication 11, comportant en outre les étapes consistant à :
si l'adresse de contrôle d'accès au support (MAC) écrite dans le champ d'adresse de destination inclus dans le paquet de données transféré à la couche de conversion est l'adresse de contrôle d'accès au support (MAC) du dispositif exécutant le procédé de communication, transférer le paquet de données à la couche IP d'une pile de protocoles installée dans le dispositif exécutant le procédé de communication.

17. Procédé d'établissement d'un réseau ad-hoc comportant les étapes consistant à :
accéder à un premier terminal sur lequel une première pile de protocoles de terminal est installée ;
accéder à un second terminal sur lequel une seconde pile de protocoles de terminal est installée ;
recevoir un paquet de données, formaté pour la première pile de protocoles de terminal, du premier terminal ; et
relativement au paquet de données reçu, exécuter les étapes selon la revendication 11.

18. Procédé selon la revendication 17, comportant en outre l'étape consistant à :
déterminer si l'adresse écrite dans un champ d'adresse de destination inclus dans le paquet de données est l'adresse d'un dispositif exécutant le procédé d'établissement d'un réseau ad-hoc ;
dans lequel, si l'adresse écrite dans le champ d'adresse de destination inclus dans le paquet de données n'est pas l'adresse du dispositif exécutant le procédé d'établissement d'un réseau ad-hoc, la conversion est exécutée.

19. Procédé selon la revendication 17, comportant en outre les étapes consistant à :
déterminer si l'adresse écrite dans un champ d'adresse de destination inclus dans le paquet de données est l'adresse d'un dispositif exécutant le procédé d'établissement d'un réseau ad hoc ; et
si l'adresse écrite dans le champ d'adresse de destination inclus dans le paquet de données est l'adresse du dispositif exécutant le procédé d'établissement d'un réseau ad hoc, transférer le paquet de données à une couche supérieure d'une pile de protocoles installée dans le dispositif exécutant le procédé d'établissement d'un réseau ad-hoc.

20. Procédé selon la revendication 17, dans lequel la première pile de protocoles est une pile de protocoles de réseau local (LAN) sans fil, et la seconde pile de protocoles est une pile de protocoles de technologie Bluetooth.

21. Procédé selon la revendication 20, dans lequel l'étape d'accès au premier terminal, comporte l'étape consistant à accéder selon les processus de combinaison, d'authentification et de balayage de la norme IEEE 802.11.

22. Procédé selon la revendication 20, dans lequel l'étape d'accès au second terminal comporte l'étape consistant à accéder selon un processus de profil de réseau personnel de la norme Bluetooth.

23. Signal représentant des codes de programme en vue de la configuration du moyen de traitement (94) d'un dispositif de terminal de réseau pour exécuter le procédé selon l'une quelconque des revendications 11 à 22.

24. Porteuse de données ayant un signal selon la revendication 23 enregistré sur ou dans celle-ci.
